# EUROPEAN PATENT APPLICATION

(11) **EP 4 840 283 A1**
(43) Date of publication of application: **18.11.2026**
(21) Application number: 26177974.8
(22) Date of filing: 11.05.2026
(51) Int. Cl.: A01D 34/416, A01D 34/43, A01D 34/84, A01D 34/86

(54) **DEVICE FOR MOWING GRASS AND SHRUBS**

(30) Priority: 12.05.2025 IT 202500010569
(71) Applicant: Rinieri S.r.l., 47121 Forli', Frazione Collina (IT)
(72) Inventor: RINIERI, Nicola, 47121 FORLI', Frazione Collina FC (IT)
(74) Representative: Modiano, Micaela Nadia

(57) **Abstract**

A device (1) for mowing grass and shrubs which comprises an arm (2) connecting to an apparatus that can move over ground, such as a vehicle, a chassis, shredder machines and an operating assembly (3), which is coupled to a portion (4) of the arm (2) that is substantially opposite to the portion coupled to the mobile apparatus, and provided with a drive unit (5) equipped with a rotating shaft (6) which is configured to support at least one cutting blade (7);
a flange (8) is interposed between the shaft (6) and the blade (7) and comprises coupling means (9) for at least one slender element (10) which protrudes in a radial direction; the slender element (10) is of the type selected from a cable, a stem, a wire, a band, a set of mutually articulated modules, and combinations thereof.

## Description

The present invention relates to a device for mowing grass and shrubs, in particular a device that can be installed on machines (mainly agricultural vehicles) for mowing operations in specific defined regions between fixed obstacles, with specific reference to its use for mowing operations in orchard, in vineyards, or other crops with similar characteristics.

The use is known of devices provided with cutting means that rotate (by virtue of the action of a respective drive unit of various type) about a substantially vertical axis, which are associated with the supporting machine by means of arms that allow relative movement at least in the direction of approach toward/retreat from an immovable obstacle. There is also at least one probe which verifies the distance between the cutting means and the immovable obstacle, commanding the movement of the connecting arms to the supporting machine in order to prevent the cutting means from colliding with the obstacle, damaging it.

Such cutting means are generally constituted by rigid blades (made of metal or polymeric or composite material) coupled to a support that can rotate about a vertical axis by way of the action of the above-mentioned drive unit: this choice is influenced by the need to have a device that is particularly robust, not prone to malfunctions and requires little maintenance, given that its use in agricultural contexts entails long operating periods, often in places where it is not possible to carry out repairs and/or maintenance.

Furthermore, rotating rigid blades are capable of cutting shrubs of even considerable thickness, and are therefore more efficient with respect to other cutting means.

By contrast, rigid blades have the drawback that they cannot be brought extremely close to the obstacle because any collision with the obstacle would seriously damage it.

Furthermore, rigid blades have a limited protrusion with respect to the respective axis of rotation, so that they always remain confined within the protective housing, to ensure the safety of the operators who are present during the mowing operations. However, this inevitably results in a certain amount of grass and shrubs remaining permanently around an obstacle (for example around the stalk of a plant or the pole of a road sign, etc.) when mowing operations are carried out with machines equipped with rigid blades.

Cutting means exist which are constituted by a shank (rigid or flexible) which is rotated at high speed (when used, for example, in brush cutters), but this type of cutting means is very delicate (subject to breakage); therefore, if applied on the devices of interest they would result in continual interruptions to mowing operations owing to the need to carry out maintenance (in particular replacement of the shank).

The principal aim of the present invention is to solve the above-mentioned drawbacks, by providing a device for mowing grass and shrubs that can cut grass and shrubs even when contiguous with an immovable obstacle without damaging the obstacle.

Within this aim, an object of the invention is to provide a device for mowing grass and shrubs that is particularly safe for operators who are present.

Another object of the invention is to provide a device for mowing grass and shrubs that is particularly robust and not prone to malfunctions.

Another object of the invention is to provide a device for mowing grass and shrubs that requires little maintenance.

Another object of the invention is to provide a device for mowing grass and shrubs that is adapted for carrying out mowing operations of long duration.

Another object of the invention is to provide a device for mowing grass and shrubs that is particularly indicated for operating in vineyards and in orchards.

Another object of the present invention is to provide a device for mowing grass and shrubs that is low cost, easily and practically implemented, and safe in use.

This aim and these and other objects which will become more apparent hereinafter are achieved by a device for mowing grass and shrubs according to claim 1.

Further characteristics and advantages of the invention will become more apparent from the detailed description that follows of a preferred, but not exclusive, embodiment of the device for mowing grass and shrubs, which is illustrated by way of non-limiting example in the accompanying drawings, wherein:

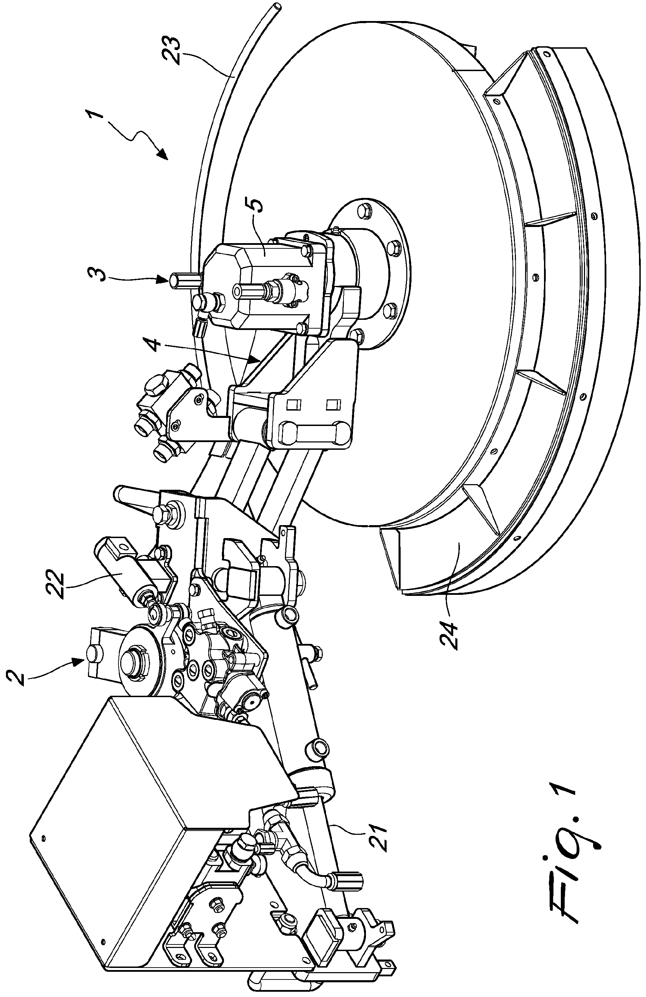

Figure 1 is a schematic perspective view of a possible embodiment of a device for mowing grass and shrubs according to the invention;

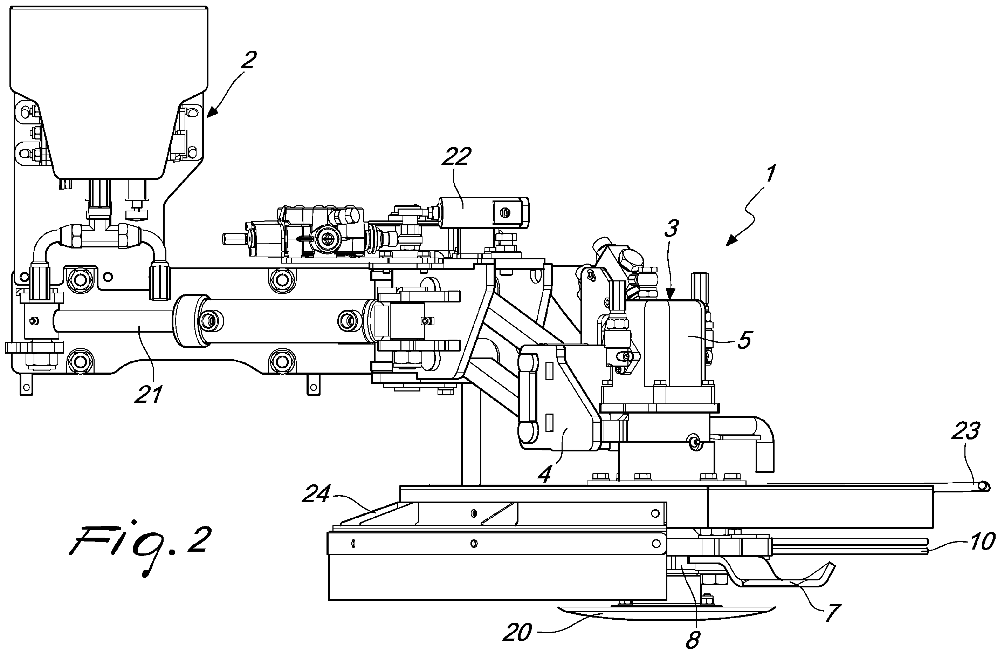

Figure 2 is a schematic rear view of the device of Figure 1;

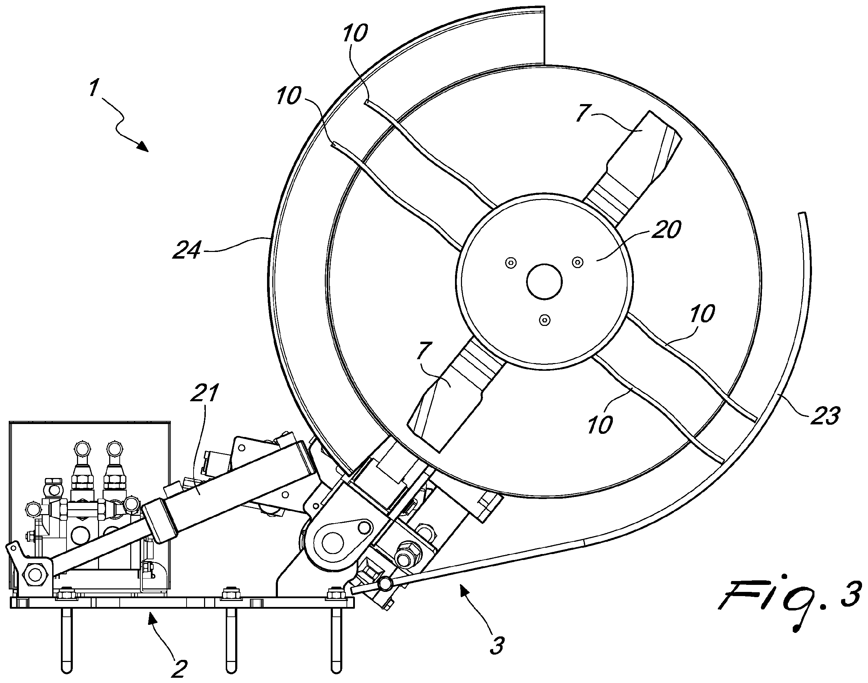

Figure 3 is a schematic view from below of the device of Figure 1;

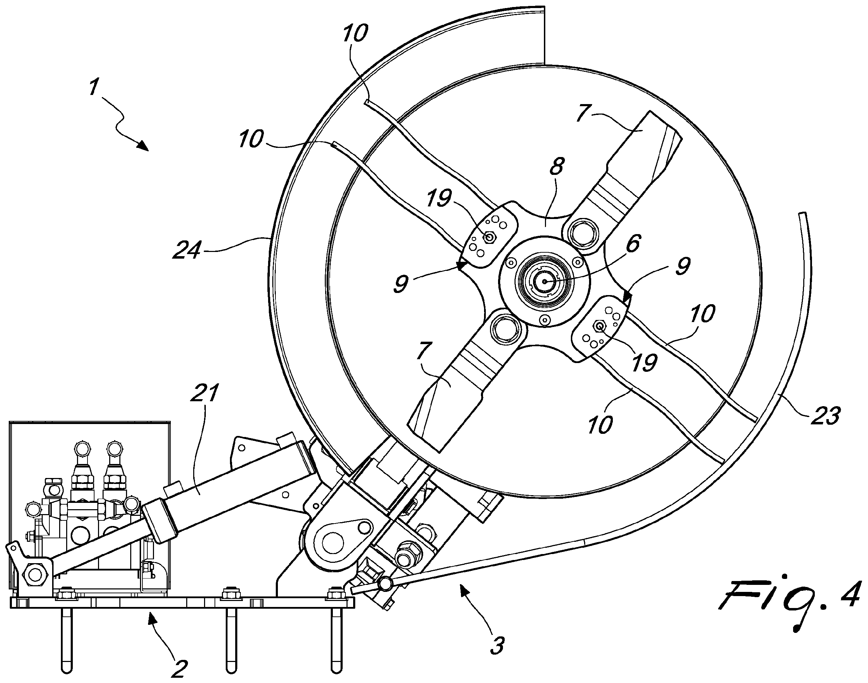

Figure 4 is a schematic view from below of the device of Figure 1 without a spacer disk;

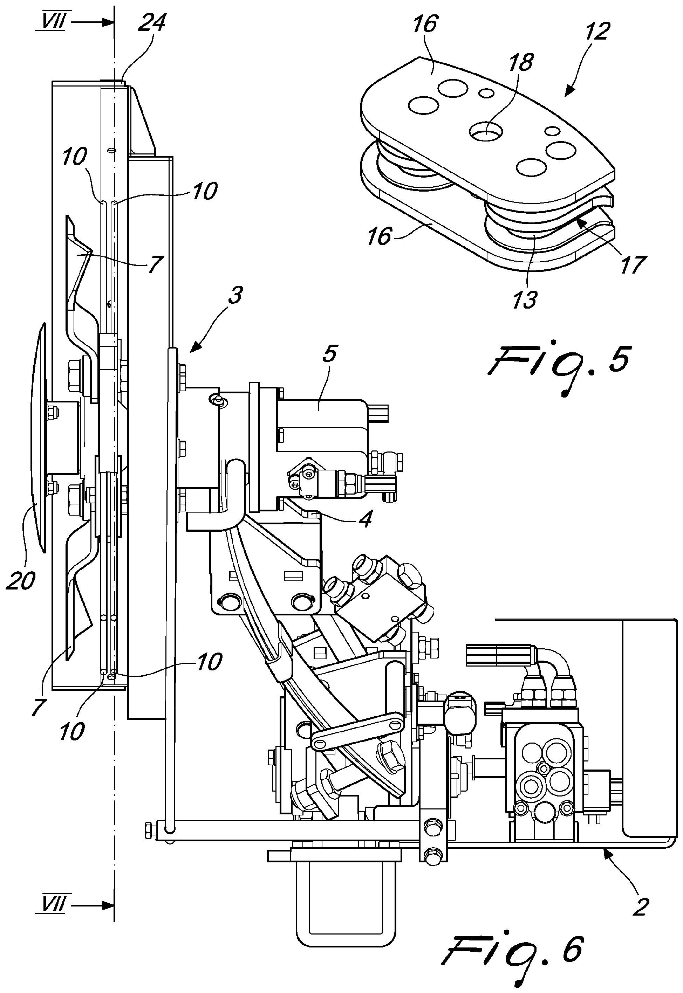

Figure 5 is a schematic perspective view of a locking member of the device of Figure 1;
Figure 6 is a schematic side view of the device of Figure 1;

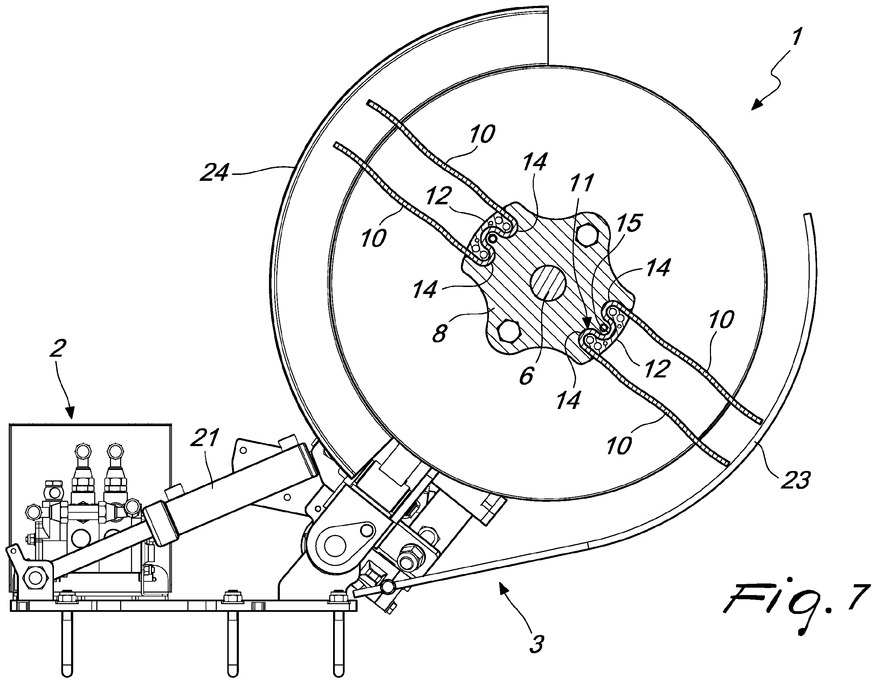

Figure 7 is a cross-sectional view taken along the line VII-VII traced in Figure 6;

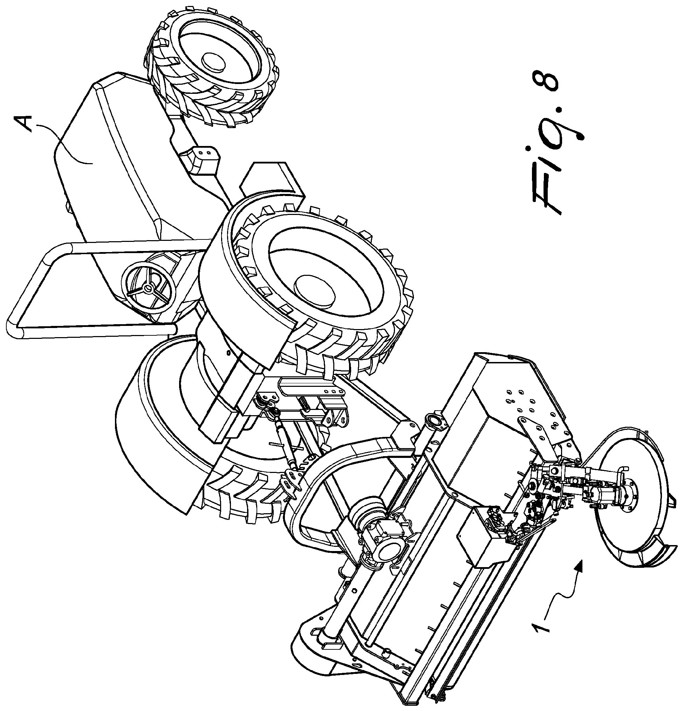

Figure 8 is a schematic perspective view of a possible embodiment of a device for mowing grass and shrubs according to the invention which is mounted on a tractor apparatus.

With reference to the figures, the reference numeral 1 generally designates a device for mowing grass and shrubs.

The device 1 according to the invention comprises an arm 2 connecting to an apparatus that can move over ground, such as a vehicle, a chassis, shredding machines (although the possibility is not ruled out of using the device 1 on other types of vehicles).

In particular the arm 2 can be connected to an agricultural vehicle (a tractor A) or to any other vehicle that has appropriate connections and couplings (i.e. capable of mechanically supporting the device and providing the necessary power supply).

The device 1 according to the invention further comprises an operating assembly 3, which is coupled to a portion 4 of the arm 2 that is substantially opposite to the portion coupled to the mobile apparatus.

The operating assembly 3 is provided with a drive unit 5 which is equipped with a rotating shaft 6 which is configured to support at least one cutting blade 7.

The drive unit 5 can be powered electrically or hydraulically or pneumatically: it should be noted that generally in agricultural machines there are hydraulic circuits to provide the necessary energy to various accessories that can be associated therewith and therefore this solution could be the one of most practical interest (although the possibility is not ruled out of adopting drive units 5 that are powered differently, for specific applications).

According to the invention, advantageously a flange 8 is interposed between the shaft 6 and the blade 7 (or the blades 7) and comprises coupling means 9 for at least one slender element 10 which protrudes in a radial direction.

The slender element 10 is conveniently of the type selected from a cable, a stem, a wire, a set of mutually articulated modules, and combinations thereof. However, the possibility is not ruled out (in specific applications) of adopting slender elements 10 that are constituted by rigid slats and/or by chains, although this option is of substantially secondary interest in the current state of the art.

The length (understood as the protrusion in a radial direction with respect to the axis of rotation of the rotating shaft 6 of the drive unit 3) of the at least one slender element 10 is greater than the length (again understood as the protrusion in a radial direction) of the at least one blade 7 and therefore, during operation, the at least one slender element 10 can reach blades of grass and shrubs that are further away from the axis of rotation (cutting them), with respect to the blades of grass and shrubs reached by the at least one blade 7 (which is always inside the protective housing and never protrudes from it, but the at least one slender element 10 does protrude from it).

This dimensional peculiarity thus ensures that most shredding and mowing operations are executed by the at least one blade 7, while the at least one slender element 10 brushes against the blades of grass that are further away, before the advancement of the device 1 causes a displacement of the at least one blade 7 until it also reaches those blades of grass.

Preferably, in the configuration of use, the at least one blade 7 is arranged closer to the ground than the at least one slender element 10. The at least one blade 7 will therefore perform mowing (shredding) at a minimum distance from the ground (an elevation at which larger and thicker shrubs can be found), while the slender element 10 will execute the respective mowing operations at a greater distance from the ground (an elevation at which there are almost exclusively blades of grass and smaller, thinner shrubs).

With particular reference to an embodiment of undoubted practical and applicative interest, the flange 8 can profitably comprise a pair of mutually opposite blades 7 and a pair of coupling means 9 for respective slender elements 10.

The coupling means 9 comprise at least one contoured perimetric concavity 11 of the flange 8, which, in the configuration of use, is delimited by an insert 12 which has an edge 13 with shape and dimensions that are complementary to those of the perimetric concavity 11.

The edge 13 and the contoured perimetric concavity 11 of the flange 8 have mutually complementary shapes and dimensions, which however can be any, so that slender elements 10 of different types and diameters can be used as a function of specific use requirements. This capacity to vary the shapes and dimensions of the seat defined between the edge 13 and the contoured perimetric concavity 11 of the flange 8 also means that a plurality of slender elements 10 can be used simultaneously.

It is evident that the device 1 according to the invention is therefore particularly versatile and reconfigurable according to the specific operating requirements that will be envisaged during its use.

The insert 12 can be conveniently attached to the flange 8 using respective fixing means.

A receptacle for the slender element 10 is advantageously defined between the contoured perimetric concavity 11 and the edge 13 of the insert 12.

It should further be noted that the at least one contoured perimetric concavity 11 comprises at least one pair of external symmetrical recesses 14 between which a central tooth 15 is interposed which protrudes further in a radial direction with respect to the axis of rotation of the rotating shaft 6.

In order to best identify its characteristics and structure, it should be noted that the insert 12 usefully comprises two laminar bands 16, which are configured to abut against mutually opposite surfaces of the flange 8, in particular on that portion of the surfaces that is contiguous to a respective contoured perimetric concavity 11 of the flange 8 proper.

Positively, a central block 17 is interposed between the laminar bands 16 and is provided with the edge 13 with shape and dimensions that are complementary to those of the perimetric concavity 11 of the flange 8.

In the assembled configuration each insert 12 is juxtaposed against a respective contoured perimetric concavity 11 of the flange 8, according to an arrangement wherein the edge 13 of the insert 12 (in particular of the respective central block 17) is facing and proximate to the contour surface (the delimiting rim) of the perimetric concavity 11, in this manner defining a receptacle for the slender element 10 (which thus will be perfectly and stably coupled to the flange 8).

It should further be noted that the insert 12 comprises at least one transverse hole 18 which passes through both of the laminar bands 16.

In the assembled configuration the hole 18 is conveniently aligned with a through channel of the central tooth 15, which protrudes further in a radial direction, of a respective contoured perimetric concavity 11 of the flange 8.

Coupling means are provided which can be inserted into the through hole 18 and the through channel, and are configured for locking the insert 12 on the flange 8.

The coupling means can be bolts 19, or pins or other, equivalent components.

Adoption of a single bolt 19 or of a single pin makes it possible to execute maintenance operations (in particular the substitution of the slender element 10) in a rapid and simple manner.

The device 1 comprises a spacer disk 20 which is coupled, in the assembled configuration, below the flange 8, optionally with the interposition of means for adjusting its protrusion with respect to the flange 8.

The means for adjusting the protrusion of the disk 20 with respect to the flange 8 are useful because they make it possible to adjust the mutual fixing position of these components, so making it possible to adjust the height of the blades 7 and of the slender elements 10 with respect to the ground (on which the disk 20 can abut with an apical portion thereof). Alternatively, the possibility is not ruled out of providing devices 1 wherein the disk 20 is rigidly fixed on the flange 8, with no possibility to adjust/modify the mutual position thereof.

The disk 20, in any case, is advantageously configured to be interposed between the ground and the flange 8 during the operation of the device 1, thus protecting the flange 8, the blades 7 and the slender elements 10 from any impacts against the ground (on which there may be stones, masonry or other hard materials).

It should be noted that, according to the invention, the arm 2 can advantageously comprise at least one actuator 21, 22 for orienting the operating assembly 3 with respect to the mobile apparatus (for example a farm tractor A).

In this manner, during the advancement movement of the mobile apparatus (for example the advancement of the farm tractor A in a vineyard or in an orchard), it is always possible to adjust the position of the operating assembly in order to best align it with the region where the mowing is to be performed.

With particular reference to an embodiment of undoubted practical and applicative interest, the operating assembly 3 can advantageously comprise at least one sensor configured to detect the distance of the operating assembly 3 from respective obstacles (for example trees or cultivated plants) present along its advancement path.

The device 1 according to the invention can profitably comprise a control and management unit which can usefully control the at least one sensor and the at least one actuator 21, 22.

This control and management unit is positively configured to acquire the signals in output from the at least one sensor; since these signals are proportional to the distance of the operating assembly 3 from at least one respective obstacle, the unit can therefore actuate the at least one actuator 21, 22 in order to orientate the operating assembly 3 with respect to the mobile apparatus, to an arrangement that can, with certainty, rule out the possibility of collision between the operating assembly 3 and the at least one obstacle (for example a tree or a cultivated plant).

In the accompanying figures the sensor for detecting the distance of the operating assembly 3 from the obstacle is constituted by a mechanical probe 23 which is arranged at a short distance from the operating assembly 3, effectively preceding it in the advancement direction.

In this manner, if the operating assembly 3 gets very close to an obstacle then the probe 23 will abut against the obstacle and will undergo a displacement: this displacement will result in a signal being sent to the control and management unit which will activate the actuators 21, 22 in order to modify the position of the operating assembly with respect to the obstacle, in so doing averting a mutual collision.

It should be noted that the assembly 3 can further comprise a protective housing 24 which prevents residues of shrubs, grass, earth or gravel from being ejected outward in an uncontrolled manner (according to a predetermined breadth of the angle of coverage afforded by the housing 24).

Advantageously the present invention solves the above-mentioned problems, by providing a device 1 for mowing grass and shrubs that is capable of cutting grass and shrubs when contiguous with an immovable obstacle without damaging the obstacle.

Conveniently the device according to the invention is particularly safe for operators who are present.

Advantageously the device 1 according to the invention is particularly robust and not prone to malfunctions.

Profitably the device 1 according to the invention requires little maintenance.

Positively the device 1 according to the invention is adapted for carrying out mowing operations of long duration.

Usefully the device 1 according to the invention is particularly indicated for operating in vineyards and in orchards.

Positively the device 1 according to the invention is easily and practically implemented and is low cost: such characteristics make the device 1 according to the invention an innovation that is safe in use.

The invention, thus conceived, is susceptible of numerous modifications and variations, all of which are within the scope of the appended claims. Moreover, all the details may be substituted by other, technically equivalent elements.

In the embodiments illustrated, individual characteristics shown in relation to specific examples may in reality be interchanged with other, different characteristics, existing in other embodiments.

In practice, the materials employed, as well as the dimensions, may be any according to requirements and to the state of the art.

The disclosures in Italian Patent Application No. 102025000010569 from which this application claims priority are incorporated herein by reference.

Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs.

## Claims

1. A device for mowing grass and shrubs, of the type comprising:
- an arm (2) connecting to an apparatus that can move over ground, such as a vehicle, a chassis, machines such as shredders,
- an operating assembly (3), which is coupled to a portion (4) of said arm (2) that is substantially opposite to the portion coupled to said mobile apparatus, and provided with a drive unit (5) equipped with a rotating shaft (6) which is configured to support at least one cutting blade (7),
**characterized in that** a flange (8) is interposed between said rotating shaft (6) and said cutting blade (7) and comprises coupling means (9) for at least one slender element (10) which protrudes in a radial direction, said slender element (10) being of the type chosen from a cable, a stem, a wire, a set of mutually articulated modules, and combinations thereof.

2. The device according to claim 1, **characterized in that** said flange (8) comprises a pair of mutually opposite cutting blades (7) and a pair of coupling means (9) for respective slender elements (10).

3. The device according to one or more of the preceding claims, **characterized in that** said coupling means (9) comprise at least one contoured perimetric concavity (11) of said flange (8) which is delimited by an insert (12) which has an edge (13) the shape and dimensions of which are complementary to those of said perimetric concavity (11) and which can be coupled to said flange (8) by virtue of respective fixing means, a receptacle for said slender element (10) being defined between said contoured perimetric concavity (11) and said edge (13) of said insert (12).

4. The device according to claim 3, **characterized in that** said at least one contoured perimetric concavity (11) comprises at least one pair of external symmetrical recesses (14) between which a central tooth (15) is interposed which protrudes further in a radial direction with respect to the axis of rotation of said rotating shaft (6).

5. The device according to one or more of claims 3 and 4, **characterized in that** said insert (12) comprises two laminar bands (16), which are configured to abut against mutually opposite surfaces of said flange (8) which are contiguous to a respective contoured perimetric concavity (11), a central block (17) being interposed between said laminar bands (16) and being provided with said edge (13) the shape and dimensions of which are complementary to those of said perimetric concavity (11), in the assembled configuration, each insert (12) being juxtaposed against a respective contoured perimetric concavity (11) of said flange (8), with said edge (13) of said insert (13) facing and proximate to the contour surface of said perimetric concavity (11), defining a receptacle for said slender element (10).

6. The device according to claim 5, **characterized in that** said insert (12) comprises at least one transverse hole (18) which passes through both laminar bands (16), in the assembled configuration said hole (18) being aligned with a through channel of said central tooth (15), which protrudes further in a radial direction, of a respective contoured perimetric concavity (11) of said flange (8), coupling means that can be inserted into said through hole (18) and said through channel being configured for locking said insert (12) on said flange (8).

7. The device according to one or more of the preceding claims, **characterized in that** it comprises a spacer disk (20) which is coupled, in the assembled configuration, below said flange (8), optionally with the interposition of means for adjusting its protrusion with respect to said flange (8), said disk (20) being configured to be interposed between the ground and said flange (8) during the operation of said device (1).

8. The device according to one or more of the preceding claims, **characterized in that** said arm (3) comprises at least one actuator (21, 22) for orienting said operating assembly (3) with respect to said mobile apparatus.

9. The device according to one or more of the preceding claims, **characterized in that** said operating assembly (3) comprises at least one sensor configured to detect the distance of said operating assembly (3) from respective obstacles present along its advancement path.

10. The device according to claims 8 and 9, **characterized in that** it comprises a control and management unit which controls said at least one sensor and said at least one actuator (21, 22), said control and management unit being configured to acquire the signals in output from said at least one sensor, said signals being proportional to the distance of said operating assembly (3) from at least one respective obstacle, and to actuate said at least one actuator (21, 22) in order to orientate said operating assembly (3) with respect to said mobile apparatus to an arrangement that rules out the possibility of collision between said operating assembly (3) and said at least one obstacle.

11. The device according to one or more of the preceding claims, **characterized in that** said flange (8) comprises means configured for locking said at least one cutting blade (7) and said at least one slender element (10) which protrudes in a radial direction at different heights with respect to the ground, in the configuration of use, said cutting blade (7) being coupled to said flange (8) at a distance from the ground that is less than the distance from the ground at which at least one slender element (10) is coupled.
